# EUROPEAN PATENT SPECIFICATION

(11) **EP 3 554 884 B1**
(45) Date of publication and mention of the grant of the patent: **14.12.2022**
(21) Application number: 17825963.6
(22) Date of filing: 15.12.2017
(51) Int. Cl.: B60L 1/00, B60L 3/00, B60R 16/03, H02J 7/34, H02H 9/00

(54) **ELECTRIC MOTOR AND METHOD FOR POWERING IT**
ELEKTROMOTOR UND VERFAHREN ZUM ANTRIEB DAVON
MOTEUR ÉLECTRIQUE ET PROCÉDÉ D'ALIMENTATION DU MOTEUR

(30) Priority: 16.12.2016 IT 201600127244
(43) Date of publication of application: 23.10.2019
(73) Proprietor: SPAL Automotive S.r.l., 42015 Correggio (Reggio Emilia) (IT)
(72) Inventor: DE FILIPPIS, Pietro, 17019 Varazze (IT)
(74) Representative: Puggioli, Tommaso
(86) International application number: PCT/IB2017/058010
(87) International publication number: WO 2018/109740

(56) References cited:
- KR-A- 20070 020 695
- US-A1- 2009 108 674
- US-A1- 2015 270 735
- US-A1- 2015 270 735
- Fabienne Nouvel ET AL: "Experiments of In-Vehicle Power Line Communications" In: "Advances in Vehicular Networking Technologies", 11 April 2011 (2011-04-11), InTech, XP055391825, ISBN: 978-953-30-7241-8 DOI: 10.5772/14258, paragraph [0001] - paragraph [0003]
- Fabienne Nouvel ET AL: "Experiments of In-Vehicle Power Line Communications" In: "Advances in Vehicular Networking Technologies", 11 April 2011 (2011-04-11), InTech, XP055391825, ISBN: 978-953-30-7241-8 DOI: 10.5772/14258,

## Description

### Technical field

This invention relates to an electric motor a method for powering the motor.

More specifically, this invention relates to a brushless motor with electronic control for driving a cooling fan in automotive applications and a method for controlling it.

### Background art

Electric fans with electronic control been recently developed in the automotive sector comprising a brushless motor for driving a corresponding fan.

The brushless motors comprise, inside them, an electronic card, or control electronics, which supervises and controls the operation of the electric fan, and are powered in direct current by the battery of the vehicle.

The electronic card comprises, amongst other components, an inverter stage for powering the windings of the motor, which in turn comprises, at the input, a series of power capacitors, generally electrolytic, also known, in the trade, as *"dc-link capacitors"* or *"dc-bus capacitors".*

The preferred embodiment of interest for this invention relates to a known configuration wherein the power supply line for the electric fan is switched ON/OFF by means of a relay controlled by a control unit, for example by the engine control unit (ECU), normally provided in the vehicle, which also puts the electric fan into operation.

The control unit basically commands, when provided, the closing of a circuit for powering the electric motor on the battery by closing the above-mentioned relay.

The main drawback of this configuration derives from the fact that the above-mentioned electrolytic capacitors, when the motor is not powered, that is to say, the power supply line is open, are discharged.

When the relay, controlled by the control unit, is closed for powering the electric fan, the capacitors charge immediately, however offering a practically zero resistance which determines the triggering, instantaneously, of the so-called *"inrush current"*, which is extremely high, even up to 300 Amperes, during the closing transient.

This current is harmful for the relay, both in terms of duration and reliability, in particular during its *bouncing,* that is to say, until it reaches a stable closed configuration.

In order to manage and withstand these rush currents the automotive sector normally uses high current and temperature relays which are, however, very expensive and in any case subject to rapid wear due to the circumstances described above.

The document US20150270735 discloses a pre-charging and voltage supply system for a DC-AC inverter is provided.

The system includes a first battery, a second battery, a contactor electrically and a microprocessor that generates a first control signal to induce a DC-DC voltage converter to increase a voltage level and a second control signal to induce the contactor to transition a contact to a closed operational position such that a first voltage level is applied to the DC-AC inverter.

### Disclosure of the invention

In this context, the main purpose of this invention is to provide an electric motor and a method for powering the motor which are free of the above-mentioned drawbacks.One aim of this invention is to provide an electric motor the entering into service of which does not trigger relatively high rush currents.

Another aim of this invention is to propose a method for powering an electric motor which allows the inrush current to be minimised at the time of putting into service of the motor.

The technical purpose indicated and at least the aims specified are substantially achieved by an electronic control circuitry according to claim 1, a system according to claim 8 and a control method according to claim 13.

### Brief description of drawings

Further features and advantages of the present invention are more apparent in the detailed description below, with reference to a preferred, non-limiting, embodiment of an electric motor, as illustrated in the accompanying drawings, in which:
- Figure 1 is a block diagram of a first embodiment, with some parts cut away for greater clarity, of an electric motor according to this invention and of a relative power supply circuit;
- Figure 2 is a block diagram of a second embodiment, with some parts cut away for greater clarity, of an electric motor according to this invention and of a relative power supply circuit;
- Figure 3 is a block diagram of a third embodiment, with some parts cut away for greater clarity, of an electric motor according to this invention and of a relative power supply circuit.

### Detailed description of preferred embodiments of the invention

With reference to the accompanying drawings, the numeral 1 denotes an electric motor according to this invention.

The motor 1 is preferably a brushless motor with electronic control of a type substantially known type and described only insofar as necessary for understanding this invention.

The motor 1 is advantageously applied in the operation of cooling fans in automotive applications.

As illustrated, the motor 1 comprises an electronic control circuitry 2 or electronic card required for the operation of the motor 1.

The electronic circuitry 2 comprises a powering line 3 the pins of which are denoted in the drawings with the polarities "+" and "-" of the power supply voltage.

The electronic circuitry 2 comprises a power driver 4, in particular a power inverter, connected to the track 3 for powering the windings of the motor not illustrated.

At the input to the driver 4 the electronic circuitry 2 comprises a series of power capacitors, the so-called *"dc-link capacitor* or *"dc-bus capacitor*" illustrated schematically as a block in Figure 5, connected in parallel to the driver 4, and an inductor 6.

The electronic circuitry 2 comprises a microprocessor, schematically illustrated as a block 7, which supervises the operation of the driver 4 and of the entire motor 1, as described in more detail below.

The electronic circuitry 2 comprises a communication interface, schematically illustrated as a block 8, to allow the motor 1 to communicate with a control unit of the vehicle, labelled 100, which, usually, also controls the switching ON of the motor 1.

The control unit 100 is, for example, the so-called ECU (Engine Control Unit) of the vehicle.

The interface 8 is in communication with the microprocessor 7 and, in use, that is to say, when the motor is installed in a vehicle, with the control unit 100.

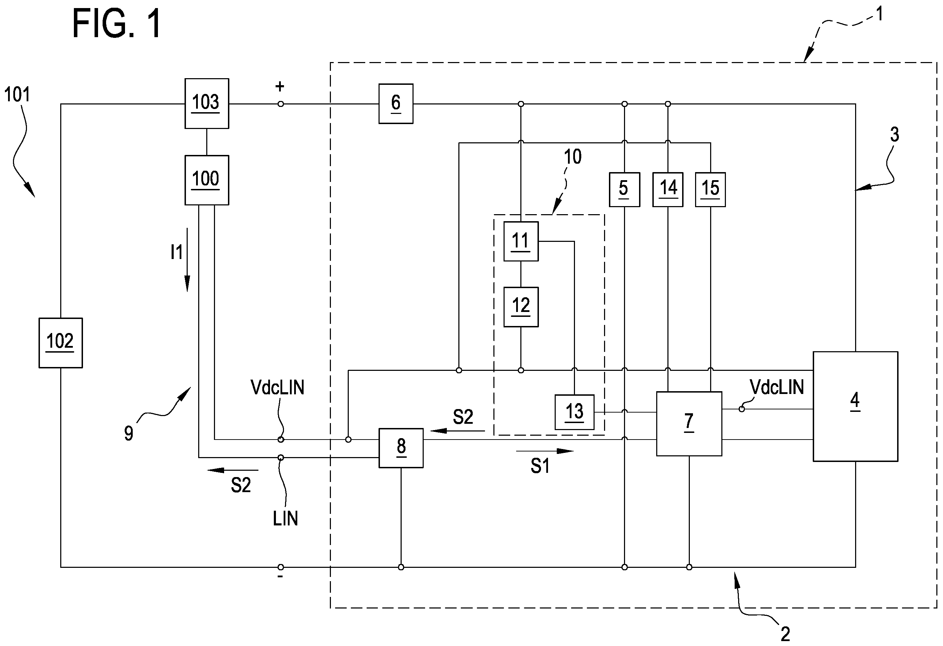

In the embodiment illustrated in Figure 1, the interface 8 is a LIN (*Local Interconnect Network*) transceiver which is a known communication protocol especially dedicated to automotive applications.

The interface 8 has a LIN logic port, to which corresponds a respective pin, and a VdcLIN power supply port, to which corresponds a respective pin.

In that case, the electronic circuitry 2 has four pins for connection to the vehicle; the above-mentioned references "+" and "-" of the power line 3 and the LIN and VdcLIN pins which are in communication with the control unit 100.

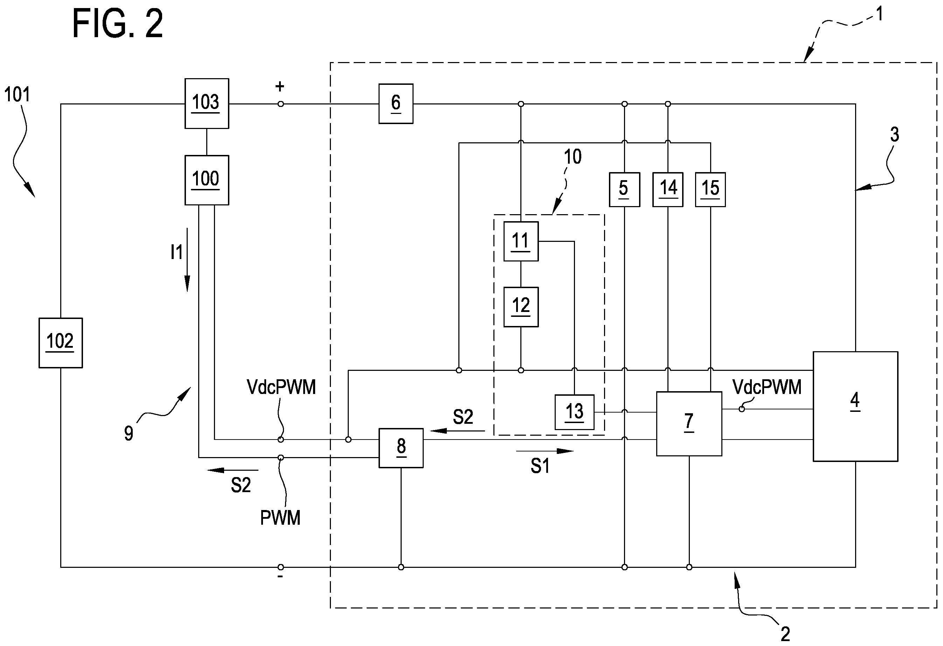

In the embodiment illustrated in Figure 2, the interface 8 is a PWM (*Pulse Width Modulation*) transceiver which is a known digital modulation protocol.

The interface 8 has a PWM logic port, to which corresponds a respective pin, and a VdcPWM power supply port, to which corresponds a respective pin.

In that case, the electronic circuitry 2 has four pins for connection to the vehicle; the above-mentioned references "+" and "-" of the power line 3 and the PWM and VdcPWM pins which are in communication with the control unit 100.

It should be noted that, as is known, in the embodiments of Figures 1 and 2, the pins VdcLIN and VdcPWM are always powered with respective positive voltages, indicated with the same reference as the respective pins, even when the motor 1 is switched OFF, that is, the powered line 3 is open.

The microprocessor 7 is also powered by means of the driver 4, which also receives the VdcPIN or VdcPWM power supply.

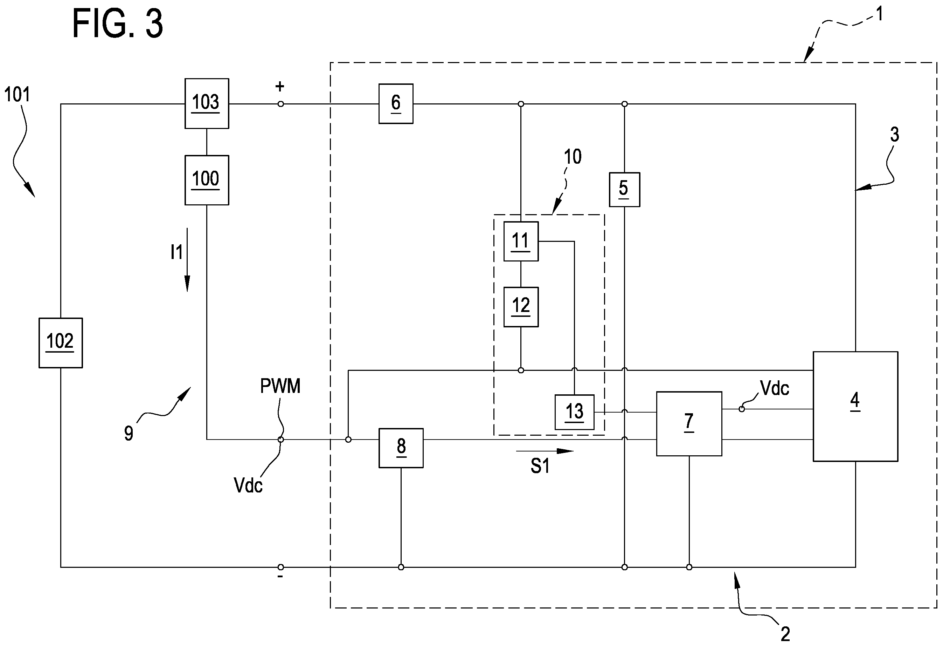

In the embodiment illustrated in Figure 3, the interface 8 is a PWM transceiver.

The interface 8 has a PWM logic port, to which corresponds a respective pin connected to the control unit 100 and it does not have, relative to the solutions of Figure 1 and 2, a power supply port.

The VdcLIN, LIN, VdcPWM and PWM pins form part, for each respective embodiment, of a connection system 9 for connection of the electronic circuitry 2 to the control unit 100.

With reference to the accompanying drawings, the numeral 101 denotes a circuit for powering the power line 3 of the motor 1.

The circuit 101 schematically comprises, in the embodiment illustrated, the battery of the vehicle, indicated with a block 102, and a relay 103 which can be switched between an open configuration, corresponding to a switched OFF status of the motor 1, and a closed configuration, corresponding to a switched ON status of the motor 1, wherein the motor 1 is connected to the battery 102.

The relay 103 is in communication with the control unit 100 and controlled by the same, in known manner, to pass from the open and closed configurations.

As illustrated, the motor 1, and in particular the electronic circuitry 2 for controlling the same, comprises a circuit 10 for pre-charging the capacitors 5.

The circuit 10, which can be switched between an open configuration and a closed configuration, operates between the connection system 9, that is, between the pins of the interface 8, and the capacitors 5 for charging the capacitors 5, as explained in more detail below.

By means of the circuit 10 it is in fact possible to recharge the capacitors 5 before the closing of the relay 103 so as to prevent the occurrence of the so-called *inrush currents.*

In the preferred embodiment illustrated in Figure 1, the circuit 10 comprises an electronic switch 11, for example a MOSFET, in series with a resistor 12 connected between the VdcLIN pin and the "+" pin for powering the driver 4 downstream of the inductor 6.

In the preferred embodiment illustrated in Figure 2, the switch 11 and the resistor 12 are connected between the VdcPWM pin and the "+" pin powering the driver 4 downstream of the inductor 6.

In the preferred embodiment illustrated in Figure 3, the switch 11 and the resistor 12 are connected between the PWM pin and the "+" pin for powering the driver 4 downstream of the inductor 6.

In the embodiments illustrated, the circuit 10 comprises a driver 13 for controlling the switch 11 in communication with the microprocessor 7.

The microprocessor 7 is configured for switching the switch 11 between an open configuration, corresponding to the open configuration of the circuit 10, and a closed configuration, corresponding to the closed configuration of the pre-charging circuit 10, upon receiving a pre-charging signal S1. The interface 8 is configured for transmitting the pre-charging signal S1 to the microprocessor 7 upon receiving an instruction I1 requesting pre-charging from the control unit 100 of the vehicle.

Preferably, the request for pre-charging from the control unit 100 is sent the electronic circuitry 2 substantially upon switching ON of the motor 1, that is to say, when the relay 103 is about to be closed.

As schematically illustrated in the embodiments of Figures 1 and 2, the pre-charging request is transmitted on the LIN or PWM logic port of the interface 8.

In these embodiments, the electronic circuitry 2 comprises a voltage sensor 14 for monitoring the voltage at the terminals of the capacitors 5 in communication with the microprocessor 7 and a voltage sensor 15 for monitoring the voltage VdcLIN or VdcPWM.

The microprocessor 7 is configured to generate a signal S2 that charging has been performed when the difference between the voltage VdcLIN or VdcPWM and the voltage at the terminals of the capacitors 5 reaches a predetermined value D that is, the deviation D falls within a predetermined range.

The microprocessor 7 is also configured for transmitting to the interface 8 the signal S2 that charging has been performed.

In one embodiment, the voltage at the terminals of the capacitors 5 is compared with VdcLIN or VdcPWM during the pre-charging step which is considered completed when the two voltages are, for example, substantially coincident, that is to say, their deviation D falls within a predetermined range.

A value which can be adopted is, for example, 10%-15% of deviation between the voltage at the terminals of the capacitors 5 and VdcLIN or VdcPWM to consider the voltages to be substantially coincident.

It should be noted that the deviation D between the voltages directly influences the extent of the inrush current: generally speaking, a greater deviation D of voltage corresponds to a greater inrush current whilst a smaller deviation D of voltage corresponds to a lower inrush current (there is an analytical relationship, which can therefore be calculated, between permitted deviation between the voltages and inrush current);

On the other hand, the devotion D between the voltages directly influences the duration of the pre-charging phase: a greater deviation D of voltage corresponds to a shorter pre-charging time, a smaller deviation D of voltage corresponds to a longer pre-charging time (there is an analytical relationship, which can therefore be calculated, between permitted deviation between the voltages and inrush current). The communication interface 8 is configured for transmitting to the control unit 100 the signal S2 that charging has been performed, preferably through the LIN or PWM logic port.

According to these embodiments, the control unit 100 is configured for controlling the closing of the relay 103 upon receiving the signal S2 that charging has been performed.

In this way, the relay 103 is closed when the voltage at the terminals of the capacitors 5 is substantially equal to the power supply voltage, or in any case the difference D between these voltages is within a predetermined range, and, therefore, the rush currents are relatively low.

With reference to Figure 3, it should be noted that, as already mentioned, the interface 8 does not comprises a powered port.

In this embodiment, the control unit 100, which comprises a circuit, not illustrated, for modulating the pulse width in communication with the communication interface 8, comprises a stage, not illustrated, for direct current powering Vdc connected to the PWM logic port.

The control unit 100 is also configured for powering the power driver 4, that is, closing the relay 103, after a predetermined pre-charging time from the sending of the first instruction I1.

The predetermined time is calculated in such a way that, based on the power supply voltage on the PWM port, the voltage at the terminals of the capacitors 5 has reached the expected value to be able to close the relay 103 preventing the occurrence of high rush currents.

For example, if the control unit 100 comprises a stage for direct current powering Vdc at 13 Volts, obtained, for example, with a circuit of the substantially known *push pull* type, the predetermined pre-charging time may be 300 ms, after sending the first instruction I1.

Generally speaking, the pre-charging time is a function of the voltage Vdc which can be applied to the circuit 10 and the greater the Vdc voltage is the shorter the pre-charging time will be.

In use, a method for powering a motor 1 connected to the control unit 100 of the vehicle, in particular a method which allows the switching ON of the motor 1, minimising the rush currents, comprises a step of sending the instruction I1 from the control unit 100 to the pre-charging circuit 10 using the interface 8.

The method comprises a step of switching the pre-charging circuit 10 to the closed configuration on the basis of the first instruction I1 in such a way that the voltage at the terminals of the corresponding powered line VdcLIN (Figure 1), VdcPWM (Figure 2) or PWM (Figure 3) can charge the capacitors 5.

When the voltage at the terminals of the capacitors 5 has reached a predetermined value, the power driver 4 is powered by the closing of the relay 103.

Preferably, for the embodiments of Figures 1 and 2, the step of powering the power driver 4 occurs when a difference between the power supply voltage VdcLIN or VdcPWM and the voltage at the terminals of the capacitors 5 is between a first and a second predetermined value.

More specifically, in the embodiments of Figures 1 and 2, when the relay 103 is open, that is, the motor 1 is not powered and there is no voltage at the pins "+" and "-", there is in any case the power voltage +VdcLIN or +VdcPWM of the transceiver 8 LIN or PWM.

The transceiver 8 is therefore powered and, through the circuits included in the driver 4, the microprocessor 7 is also powered.

When the control unit 100, outside the motor 1, sends the "pre-charging request" message to the interface 8, the message is re-transmitted to the microprocessor 7 which, using the driver 13, the switch 11 and the resistor 13, starting from the voltage +VdcLIN or +VdcPWM, controls and actuates the pre-charging of the capacitors 5.

The voltage of the capacitors 5 is compared with +VdcLIN or +VdcPWM during the pre-charging step which is considered completed when the two voltages are coincident, that is to say, their deviation falls within a predetermined range.

At this point, the microprocessor 7 transmits a message "recharging has been performed" to the LIN or PWM interface 8, using the signal S2, which the interface 8 repeats to the external control unit 100.

The control unit 100 can therefore control the application of the supply voltage to the motor 1 by the closing of the relay 103.

Considering the embodiment in Figure 3, the first instruction I1 is sent to a logic port of the communication interface in the form of a high level signal, at a predetermined voltage value Vdc, for example 13 Volts, which constitutes the power supply voltage for charging the capacitor 5.

The step of powering the power driver 4 occurs after a predetermined pre-charging time, as a function of the voltage Vdc, from the switching of the pre-charging circuit 10 to the closed configuration, since, on the basis of the design data, the voltage at the terminals of the capacitor 5 reach a predetermined value after that predetermined time.

Basically, when the motor 1 is not powered, that is to say, the relay 103 is open and there is no voltage at the pins "+" and "-", there is no power supply voltage of the interface 8 PWM and of the microprocessor 7. When the external control unit 100, equipped with an output stage which is able to dispense a current sufficient to support the pre-charging of the capacitors 5, for example the above-mentioned *push pull* stage, sends to the PWM interface 8 the high level, that is, the PWM input is kept at the positive voltage Vdc for a suitable period of time, the microprocessor 7 is powered through the circuits included in the driver 4.

The microprocessor 7 immediately activates and controls the pre-charging of the capacitors 5.

During this step, the pre-charging process is powered through the PWM signal which, in this context, adopts the meaning of power supply voltage Vdc as it is maintained high.

After a suitably calculated period of time, during which the pre-charging is completed, the external control unit 100 controls the application of the power supply voltage to the motor 1 by the closing of the relay 103 and the input PWM may thereby start to receive/transmit modulated signals, for example commands, feedback, diagnostics.

The presence of the pre-charging circuit in the motor, suitably controlled by the control unit of the vehicle, allows the rush currents to be significantly reduced.

In this way, less costly relays can be adopted which are also more reliable, as they are less stressed during the operations for switching ON the fan.

If an additional power supply is not provided, in the electronic card, it is possible to use the control unit to generate a voltage which can charge the capacitors.

## Claims

1. An electronic control circuitry for an electric motor for automotive applications installable on board of a vehicle, comprising:
a power driver (4);
at least one capacitor (5) at the inlet to the power driver (4);
a communication interface (8) for communicating with a control unit (100) of the vehicle via a connection system (9) for connecting the electronic control circuitry to the control unit (100) of the vehicle, such connection system (9) comprising a voltage line (VdcLIN, VdcPWM, PWM);
a microprocessor (7) in communication with communication interface (8) and with the power driver (4);
a pre-charging circuit (10) for pre-charging the capacitor (5) , the pre-charging circuit (10) being switchable between an open configuration and a closed configuration, **characterized in that** the pre-charging circuit (10) operates between the connection system (9) and the capacitor (5) and wherein the pre-charging circuit (10) is connected to the voltage line (VdcLIN, VdcPWM, PWM) for charging the capacitor (5).

2. Electronic control circuitry according to claim 1, wherein the microprocessor (7) is in communication with the pre-charging circuit (10) and configured for switching the pre-charging circuit (10) to the closed configuration upon receiving a pre-charging signal (S1) and wherein the communication interface (8) is configured for transmitting the pre-charging signal (S1) to the microprocessor (7) upon receiving a first instruction (11) from the control unit (100) of the vehicle using the connection system (9).

3. Electronic control circuitry according to any one of the preceding claims, wherein the microprocessor (7) is configured for transmitting to the communication interface (8) a signal (S2) that charging has been performed at an occurrence of a predetermined event and wherein the communication interface (8) is configured for transmitting to the control unit (100) the signal (S2) that charging has been performed.

4. Electronic control circuitry according to claim 3, wherein the microprocessor (7) is configured for generating the signal (S2) that charging has been performed when a difference between the voltage (VdcLIN, VdcPWM) on the voltage line (VdcLIN, VdcPWM) and the voltage at the terminals of the capacitor (5) is included within a predetermined range.

5. Electronic control circuitry according to any one of the preceding claims, wherein the pre-charging circuit (10) comprises a controlled switch (11) in communication with the microprocessor (7), the pre-charging circuit (10) being switchable between the open and closed configurations by means of the controlled switch (11) controlled by the microprocessor (7).

6. Electronic control circuitry according to any one of the preceding claims, wherein the connection system (9) comprises a powered input (VdcLIN, VdcPWM) of the communication interface (8), the pre-charging circuit (10) operating between the powered input (VdcLIN, VdcPWM), which defines the voltage line, and the capacitor (5).

7. Electronic control circuitry according to any one of the preceding claims, wherein the connection system (9) comprises a logic port (PWM) of the communication interface (8), the pre-charging circuit (10) operating between the logic port (PWM), which defines the voltage line, and the capacitor (5).

8. An electric motor for automotive applications installable on board of a vehicle comprising an electronic control circuitry according to anyone of claims 1 to 7.

9. A system comprising an electric motor (1) according to claim 8 and a control unit connected to the electric motor through the connection system (9), the control unit being configured for sending to the communication interface (8) a first instruction (I1) for switching the pre-charging circuit (10) to the closed configuration.

10. System according to claim 9, wherein the control unit comprises a circuit for modulating the pulse width in communication with the communication interface and comprising a direct current powering stage connected to a logic port (PWM) of the interface (8), the communication interface (8) being of the PWM type.

11. System according to claim 9 or 10 wherein the control unit is configured for closing a power supply circuit of the power driver (4) upon receiving a signal (S2) that charging has been performed of the capacitor (5).

12. System according to any one of claims 9 to 11 wherein the control unit is configured for closing a power supply circuit of the power driver (4) after a predetermined time from the sending of the first instruction (11).

13. A method for controlling a system according to anyone of claims 9 to 12, the control unit being the control unit (100) of a vehicle, the method performing the steps of:
sending a first instruction (11) from the control unit (100) of the vehicle to the pre-charging circuit (10);
switching the pre-charging circuit (10) to the closed configuration based on the first instruction (11) in such a way that the voltage line (VdcLIN, VdcPWM, Vdc) charge the capacitor (5);
powering the power driver (4) when the voltage at the terminals of the capacitor (5) has reached a predetermined value.

14. The method according to claim 13, wherein the step of sending a first instruction (11) from the control unit (100) of the vehicle to the pre-charging circuit (10) comprises a first step of sending the first instruction (11) to the communication interface (8) and a second step of sending a pre-charging signal (S1) from the communication interface (8) to the microprocessor (7).

15. The method according to claim 13 or 14, wherein the first instruction (11) is sent to a logic port (PWM) of the communication interface (8) in the form of a high level signal at a predetermined voltage value (Vdc), for example 13 Volts, the high level signal constituting aa power supply voltage for charging the capacitor (5), the voltage line comprising the logic port (PWM).

16. The method according to any of the claims 13 to 15, wherein the step of powering the power driver (4) occurs after a predetermined time from the switching of the pre-charging circuit (10) to the closed configuration, the voltage at the terminals of the capacitor (5) reaching the predetermined value after the predetermined time.

17. The method according to any of the claims from 13 to 16, wherein the step of powering the power driver (4) occurs when a difference between the power supply voltage at the voltage line (VdcLIN, VdcPWM) and the voltage at the terminals of the capacitor is between a first and a second predetermined value.

## Patentansprüche

1. Elektronische Steuerschaltung für einen Elektromotor für Kraftfahrzeuganwendungen, die an Bord eines Fahrzeugs installiert werden kann, umfassend:
einen Leistungstreiber (4);
mindestens einen Kondensator (5) am Einlass zum Leistungstreiber (4);
eine Kommunikationsschnittstelle (8) zum Kommunizieren mit einer Steuereinheit (100) des Fahrzeugs über ein Verbindungssystem (9) zum Verbinden der elektronischen Steuerschaltung mit der Steuereinheit (100) des Fahrzeugs, wobei das Verbindungssystem (9) eine Spannungsleitung (VdcLIN, VdcPWM, PWM) umfasst;
einen Mikroprozessor (7) in Kommunikation mit der Kommunikationsschnittstelle (8) und mit dem Leistungstreiber (4);
eine Vorladeschaltung (10) zum Vorladen des Kondensators (5), wobei die Vorladeschaltung (10) zwischen einer offenen Auslegung und einer geschlossenen Auslegung umschaltbar ist, **dadurch gekennzeichnet, dass** die Vorladeschaltung (10) zwischen dem Verbindungssystem (9) und dem Kondensator (5) arbeitet und wobei die Vorladeschaltung (10) mit der Spannungsleitung (VdcLIN, VdcPWM, PWM) zum Laden des Kondensators (5) verbunden ist.

2. Elektronische Steuerschaltung nach Anspruch 1, wobei der Mikroprozessor (7) mit der Vorladeschaltung (10) in Kommunikation steht und ausgelegt ist, um die Vorladeschaltung (10) nach Empfang eines Vorladesignals (S1) hin in die geschlossene Auslegung umzuschalten, und wobei die Kommunikationsschnittstelle (8) ausgelegt ist, um das Vorladesignal (S1) nach Empfang einer ersten Anweisung (I1) von der Steuereinheit (100) des Fahrzeugs unter Verwendung des Verbindungssystems (9) hin an den Mikroprozessor (7) zu übertragen.

3. Elektronische Steuerschaltung nach einem der vorhergehenden Ansprüche, wobei der Mikroprozessor (7) ausgelegt ist, um an die Kommunikationsschnittstelle (8) ein Signal (S2) zu übertragen, dass das Laden bei einem Auftreten eines vorbestimmten Ereignisses durchgeführt wurde, und wobei die Kommunikationsschnittstelle (8) ausgelegt ist, um an die Steuereinheit (100) das Signal (S2) zu übertragen, dass das Laden durchgeführt wurde.

4. Elektronische Steuerschaltung nach Anspruch 3, wobei der Mikroprozessor (7) zum Erzeugen des Signals (S2) ausgelegt ist, dass das Laden durchgeführt wurde, wenn eine Differenz zwischen der Spannung (VdcLIN, VdcPWM) auf der Spannungsleitung (VdcLIN, VdcPWM) und der Spannung an den Anschlüssen des Kondensators (5) innerhalb eines vorbestimmten Bereichs enthalten ist.

5. Elektronische Steuerschaltung nach einem der vorhergehenden Ansprüche, wobei die Vorladeschaltung (10) einen gesteuerten Schalter (11) umfasst, der mit dem Mikroprozessor (7) in Kommunikation steht, wobei die Vorladeschaltung (10) mittels des gesteuerten Schalters (11), der vom Mikroprozessor (7) gesteuert wird, zwischen der offenen und der geschlossenen Auslegung umschaltbar ist.

6. Elektronische Steuerschaltung nach einem der vorhergehenden Ansprüche, wobei das Verbindungssystem (9) einen angetriebenen Eingang (VdcLIN, VdcPWM) der Kommunikationsschnittstelle (8) umfasst, wobei die Vorladeschaltung (10) zwischen dem angetriebenen Eingang (VdcLIN, VdcPWM), der die Spannungsleitung definiert, und dem Kondensator (5) arbeitet.

7. Elektronische Steuerschaltung nach einem der vorhergehenden Ansprüche, wobei das Verbindungssystem (9) eines Logiktores (PWM) der Kommunikationsschnittstelle (8) umfasst, wobei die Vorladeschaltung (10) zwischen dem Logiktor (PWM), der die Spannungsleitung definiert, und dem Kondensator (5) arbeitet.

8. Elektromotor für Kraftfahrzeuganwendungen, der an Bord eines Fahrzeugs installierbar ist und eine elektronische Steuerschaltung nach einem der Ansprüche 1 bis 7 umfasst.

9. System, umfassend einen Elektromotor (1) nach Anspruch 8 und eine Steuereinheit, die über das Verbindungssystem (9) mit dem Elektromotor verbunden ist, wobei die Steuereinheit so ausgelegt ist, dass sie an die Kommunikationsschnittstelle (8) eine erste Anweisung (I1) zum Umschalten der Vorladeschaltung (10) in die geschlossene Auslegung sendet.

10. System nach Anspruch 9, wobei die Steuereinheit eine Schaltung zum Modulieren der Impulsbreite in Kommunikation mit der Kommunikationsschnittstelle umfasst und eine Gleichstromversorgungsstufe umfasst, die mit einem Logiktor (PWM) der Schnittstelle (8) verbunden ist, wobei die Kommunikationsschnittstelle (8) vom PWM-Typ ist.

11. System nach Anspruch 9 oder 10, wobei die Steuereinheit zum Schließen einer Stromversorgungsschaltung des Leistungstreibers (4) nach Empfang eines Signals (S2), dass das Laden des Kondensators (5) durchgeführt wurde, ausgelegt ist.

12. System nach einem der Ansprüche 9 bis 11, wobei die Steuereinheit zum Schließen einer Stromversorgungsschaltung des Leistungstreibers (4) nach einer vorbestimmten Zeit ab dem Senden der ersten Anweisung (I1) ausgelegt ist.

13. Verfahren zum Steuern eines Systems nach einem der Ansprüche 9 bis 12, wobei es sich bei der Steuereinheit um die Steuereinheit (100) eines Fahrzeugs handelt, wobei das Verfahren die folgenden Schritte ausführt:
Senden einer ersten Anweisung (I1) von der Steuereinheit (100) des Fahrzeugs an die Vorladeschaltung (10);
Umschalten der Vorladeschaltung (10) in die geschlossene Auslegung auf Grundlage der ersten Anweisung (11), sodass die Spannungsleitung (VdcLIN, VdcPWM, Vdc) den Kondensator (5) auflädt;
Antreiben des Leistungstreibers (4), wenn die Spannung an den Anschlüssen des Kondensators (5) einen vorgegebenen Wert erreicht hat.

14. Verfahren nach Anspruch 13, wobei der Schritt zum Senden einer ersten Anweisung (I1) von der Steuereinheit (100) des Fahrzeugs an die Vorladeschaltung (10) einen ersten Schritt zum Senden der ersten Anweisung (I1) an die Kommunikationsschnittstelle (8) und einen zweiten Schritt zum Senden eines Vorladesignals (S1) von der Kommunikationsschnittstelle (8) an den Mikroprozessor (7) umfasst.

15. Verfahren nach Anspruch 13 oder 14, wobei die erste Anweisung (I1) in Form eines Signals mit hohem Pegel bei einem vorbestimmten Spannungswert (Vdc), beispielsweise 13 Volt, an ein Logiktor (PWM) der Kommunikationsschnittstelle (8) gesendet wird, wobei das Signal mit hohem Pegel eine Stromversorgungsspannung zum Laden des Kondensators (5) bildet, wobei die Spannungsleitung das Logiktor (PWM) umfasst.

16. Verfahren nach einem der Ansprüche 13 bis 15, wobei der Schritt zum Antreiben des Leistungstreibers (4) nach einer vorbestimmten Zeit vom Umschalten der Vorladeschaltung (10) in die geschlossene Auslegung erfolgt, wobei die Spannung an den Anschlüssen des Kondensators (5) den vorbestimmten Wert nach der vorbestimmten Zeit erreicht.

17. Verfahren nach einem der Ansprüche 13 bis 16, wobei der Schritt zum Antreiben des Leistungstreibers (4) auftritt, wenn eine Differenz zwischen der Stromversorgungsspannung an der Spannungsleitung (VdcLIN, VdcPWM) und der Spannung an den Anschlüssen des Kondensators zwischen einem ersten und einem zweiten vorbestimmten Wert liegt.

## Revendications

1. Circuits de commande électroniques pour un moteur électrique destinés à des applications automobiles pouvant être installées à bord d'un véhicule, comprenant :
un driver de puissance (4) ;
au moins un condensateur (5) à l'entrée du driver de puissance (4) ;
une interface de communication (8) pour communiquer avec une unité de commande (100) du véhicule via un système de connexion (9) pour connecter les circuits de commande électroniques à l'unité de commande (100) du véhicule, ce système de connexion (9) comprenant une ligne de tension (VdcLIN, VdcPWM, PWM) ;
un microprocesseur (7) en communication avec l'interface de communication (8) et avec le driver de puissance (4) ;
un circuit de précharge (10) pour précharger le condensateur (5), le circuit de précharge (10) étant commutable entre une configuration d'ouverture et une configuration de fermeture, **caractérisé en ce que** le circuit de précharge (10) fonctionne entre le système de connexion (9) et le condensateur (5) et dans lequel le circuit de précharge (10) est connecté à la ligne de tension (VdcLIN, VdcPWM, PWM) pour charger le condensateur (5).

2. Circuits de commande électroniques selon la revendication 1, dans lesquels le microprocesseur (7) est en communication avec le circuit de précharge (10) et configuré pour commuter le circuit de précharge (10) dans la configuration de fermeture à la réception d'un signal de précharge (S1) et dans lesquels l'interface de communication (8) est configurée pour transmettre le signal de précharge (S1) au microprocesseur (7) à la réception d'une première instruction (I1) provenant de l'unité de commande (100) du véhicule utilisant le système de connexion (9).

3. Circuits de commande électroniques selon l'une quelconque des revendications précédentes, dans lesquels le microprocesseur (7) est configuré pour transmettre à l'interface de communication (8) un signal (S2) indiquant que la charge a été effectuée lors d'une occurrence d'un événement prédéterminé et dans lesquels l'interface de communication (8) est configurée pour transmettre, à l'unité de commande (100), le signal (S2) indiquant que la charge a été effectuée.

4. Circuits de commande électroniques selon la revendication 3, dans lesquels le microprocesseur (7) est configuré pour générer le signal (S2) indiquant que la charge a été effectuée lorsqu'une différence entre la tension (VdcLIN, VdcPWM) sur la ligne de tension (VdcLIN, VdcPWM) et la tension aux bornes du condensateur (5) est comprise dans une plage prédéterminée.

5. Circuits de commande électroniques selon l'une quelconque des revendications précédentes, dans lequel le circuit de précharge (10) comprend un interrupteur commandé (11) en communication avec le microprocesseur (7), le circuit de précharge (10) pouvant être commuté entre les configurations d'ouverture et de fermeture au moyen de l'interrupteur commandé (11) piloté par le microprocesseur (7).

6. Circuits de commande électroniques selon l'une quelconque des revendications précédentes, dans lesquels le système de connexion (9) comprend une entrée alimentée (VdcLIN, VdcPWM) de l'interface de communication (8), le circuit de précharge (10) fonctionnant entre l'entrée alimentée (VdcLIN, VdcPWM), qui définit la ligne de tension, et le condensateur (5).

7. Circuits de commande électroniques selon l'une quelconque des revendications précédentes, dans lesquels le système de connexion (9) comprend un port logique (PWM) de l'interface de communication (8), le circuit de précharge (10) fonctionnant entre le port logique (PWM), qui définit la ligne de tension, et le condensateur (5).

8. Moteur électrique pour applications automobiles pouvant être installées à bord d'un véhicule comprenant des circuits de commande électroniques selon l'une quelconque des revendications 1 à 7.

9. Système comprenant un moteur électrique (1) selon la revendication 8 et une unité de commande connectée au moteur électrique par le système de connexion (9), l'unité de commande étant configurée pour envoyer à l'interface de communication (8) une première instruction (I1) pour commuter le circuit de précharge (10) à la configuration de fermeture.

10. Système selon la revendication 9, dans lequel l'unité de commande comprend un circuit de modulation de la largeur d'impulsion en communication avec l'interface de communication et comprenant un étage d'alimentation en courant continu connecté à un port logique (PWM) de l'interface (8), l'interface de communication (8) étant de type MID.

11. Système selon la revendication 9 ou 10, dans lequel l'unité de commande est configurée pour fermer un circuit d'alimentation du driver de puissance (4) lors de la réception d'un signal (S2) indiquant que la charge du condensateur (5) a été effectuée.

12. Système selon l'une quelconque des revendications 9 à 11, dans lequel l'unité de commande est configurée pour fermer un circuit d'alimentation du driver de puissance (4) après un temps prédéterminé à partir de l'envoi de la première instruction (I1).

13. Procédé de commande d'un système selon l'une quelconque des revendications 9 à 12, l'unité de commande étant l'unité de commande (100) d'un véhicule, le procédé effectuant les étapes de :
envoyer une première instruction (I1) de l'unité de commande (100) du véhicule au circuit de précharge (10) ;
commuter le circuit de précharge (10) vers la configuration de fermeture sur la base de la première instruction (I1) de telle sorte que la ligne de tension (VdcLIN, VdcPWM, Vdc) charge le condensateur (5) ;
alimenter le driver de puissance (4) lorsque la tension aux bornes du condensateur (5) a atteint une valeur prédéterminée.

14. Procédé selon la revendication 13, dans lequel l'étape consistant à envoyer une première instruction (I1) de l'unité de commande (100) du véhicule au circuit de précharge (10) comprend une première étape consistant à envoyer la première instruction (I1) à l'interface de communication (8) et une seconde étape consistant à envoyer un signal de précharge (S1) de l'interface de communication (8) au microprocesseur (7).

15. Procédé selon la revendication 13 ou 14, dans lequel la première instruction (I1) est envoyée à un port logique (PWM) de l'interface de communication (8) sous la forme d'un signal de niveau élevé à une valeur de tension prédéterminée (Vdc), par exemple 13 volts, le signal de niveau élevé constituant une tension d'alimentation pour charger le condensateur (5), la ligne de tension comprenant le port logique (PWM).

16. Procédé selon l'une quelconque des revendications 13 à 15, dans lequel l'étape d'alimentation du driver de puissance (4) intervient après un temps prédéterminé à partir de la commutation du circuit de précharge (10) à la configuration de fermeture, la tension aux bornes du condensateur (5) atteignant la valeur prédéterminée après le temps prédéterminé.

17. Procédé selon l'une quelconque des revendications 13 à 16, dans lequel l'étape d'alimentation du driver de puissance (4) se produit lorsqu'une différence entre la tension d'alimentation sur la ligne de tension (VdcLIN, VdcPWM) et la tension aux bornes du condensateur est comprise entre une première et une deuxième valeur prédéterminée.
